# EUROPEAN PATENT SPECIFICATION

(11) **EP 3 622 387 B1**
(45) Date of publication and mention of the grant of the patent: **21.08.2024**
(21) Application number: 18798360.6
(22) Date of filing: 02.05.2018
(51) Int. Cl.: G06F 7/04

(54) **SECURE HOTSPOT SETUP**
SICHERE HOTSPOT-EINRICHTUNG
ÉTABLISSEMENT DE ZONE D'ACCÈS SANS FIL SÉCURISÉE

(30) Priority: 09.05.2017 US 201715590977
(43) Date of publication of application: 18.03.2020
(73) Proprietor: Coronet Cyber Security Ltd, 6744252 Tel Aviv (IL)
(72) Inventor: MILCHTAICH, Doron, 7655506 Rehovot (IL)
(74) Representative: Becker Kurig & Partner Patentanwälte mbB
(86) International application number: PCT/IB2018/053050
(87) International publication number: WO 2018/207056

(56) References cited:
- EP-A1- 3 079 335
- US-A1- 2008 151 847
- US-A1- 2014 073 288
- US-A1- 2014 073 289
- US-A1- 2014 073 289
- US-A1- 2015 201 444
- US-A1- 2016 095 153
- US-A1- 2016 095 153
- US-A1- 2016 295 622
- US-A1- 2017 126 705
- US-B2- 9 585 177
- US-B2- 9 634 726

## Description

### FIELD AND BACKGROUND OF THE INVENTION

The present invention relates to wireless communications security and, more particularly, but not exclusively to a system and method of secure hotspot set-up.

Nowadays, wireless communication is usually implemented using access points that provide client devices with access to a Wide Area Network (WAN) such as the Internet. Such a wireless access point may include, for example, a Wi-Fi access point, a base station of a mobile telephony network, etc., as described in further detail hereinbelow.

Exploiting wireless communication, hackers are very often able to capture sensitive information wirelessly communicated between a wireless access point and an endpoint device, say sensitive enterprise information, and even use credential data communicated between the access point and client device, to gain access to enterprise computing resources.

For example, a malicious access point that a client device mistakenly connects to, may be used to divert traffic to malicious servers (say for credential phishing), use port exploitation and code injection, break SSL (Secure Sockets Layer) protection, manipulate SSL certificates, steal user credentials, etc., as known in the art.

Many enterprises implement strong communications security methods such as the WPA (Wi-Fi Protected Access) - Enterprise Protocol, EAP (Extensible Authentication Protocol) authentication and encapsulation, on their employees' client devices, on Wi-Fi hot spots setup by the enterprises in their office, etc.

However, this is rarely the case with private users or SOHO (Small Office / Home Office) users, the primary reason usually being such users' difficulty in setting up secure connectivity on their private client devices.

Even if a corporate user does use a secure wireless network (say a WPA-Enterprise based network) at her work or at home, once she steps outside the coverage area of the secure network, she may have to access the internet over a less secured wireless network, say using a public Wi-Fi hotspot, or over a cellular network.

As a result, the corporate user may expose her client device (say tablet computer), its data and its communication with corporate servers over the Intranet network and with 'public' exo-Intranet servers, such as mail, file sharing, storage, or voice service servers.

Relevant prior art disclosures in this technical field are US2016/095153 A1 and US2014/073289 A1.

### SUMMARY OF THE INVENTION

According to one aspect of the present invention, there is provided a computer implemented method of secure hotspot set-up, according to claim 1.

According to a second aspect of the present invention, there is provided an apparatus of secure hotspot set-up according to claim 7.

Other advantageous embodiments are disclosed in the appended dependent claims.

For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings.

With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. The description taken with the drawings making apparent to those skilled in the art how the several forms of the invention may be embodied in practice.

In the drawings:
**Fig. 1** is a simplified block diagram schematically illustrating a first exemplary apparatus for secure hotspot set-up, according to an exemplary embodiment of the present invention.
**Fig. 2** is a simplified block diagram schematically illustrating a second exemplary apparatus for secure hotspot set-up, according to an exemplary embodiment of the present invention.
**Fig. 3** is a simplified block diagram schematically illustrating an exemplary system for secure hotspot set-up, according to an exemplary embodiment of the present invention.
**Fig. 4** is a simplified flowchart illustrating a first exemplary method of secure hotspot set-up, according to an exemplary embodiment of the present invention.
**Fig. 5** is a simplified flowchart illustrating a second exemplary method of secure hotspot set-up, according to an exemplary embodiment of the present invention.
**Fig. 6** is a simplified block diagram schematically illustrating a first exemplary computer readable memory storing computer executable instructions for performing steps of secure hotspot set-up, according to an exemplary embodiment of the present invention.
**Fig. 7** is a simplified block diagram schematically illustrating a second exemplary computer readable memory storing computer executable instructions for performing steps of secure hotspot set-up, according to an exemplary embodiment of the present invention.

### DESCRIPTION OF THE PREFERRED EMBODIMENTS

The present embodiments comprise a method and an apparatus for secure hotspot set-up.

Nowadays, hackers are very often able to capture sensitive information (say sensitive enterprise information) wirelessly communicated between a wireless access point and a client device such as a laptop computer or a smart phone. The hackers may even use credential data included in the captured information, to gain access to enterprise computing resources.

For example, a malicious access point that a client device mistakenly connects to, may be used by criminals to attack client devices, say by diverting traffic to malicious servers (say for credential phishing), breaking SSL (Secure Sockets Layer) protection, manipulating SSL certificates, stealing user credentials, etc.

To protect their computing resources (say organizational information systems), many enterprises use strong communications security methods such as the WPA-Enterprise Protocol, EAP authentication, etc., on wireless networks setup by the enterprises in their office, on company laptops, etc.

Indeed, very often, a corporate user may use only wireless network secured with a strong protocol such as the WPA-Enterprise protocol when working on a client device such as a desktop computer, a laptop computer etc., at her work or even at home.

However, when the user is at a public place such as a restaurant, a hotel, etc., the user may still use a less secured wireless network, say a public Wi-Fi hotspot that uses a simple password (say a one that is not user-specific) or no password at all, rather than user-specific passwords, encryption protocols, or other methods that would improve data security.

That is especially the case when the user uses a client device other than the computers that she regularly uses for work (say when she uses her private smart phone or tablet) since such client devices may be not set up for secured connectivity based on strong protocols like the WPA-Enterprise protocol.

As a result, the corporate user may expose her client device, its data and its communication with corporate servers, etc., as described in further detail hereinabove.

According to some embodiments of the present invention, a secure hotspot (say a secure Wi-Fi hotspot) is automatically setup on a first one of the user's client devices (say on her work laptop computer or on her work cell phone) when she also carries a second client device (say her private cellular phone) with her.

Thus, in one example, the secure hotspot is automatically setup on the user's first client device whenever the first client device detects her second client device's presence in proximity to the first client device, as described in further detail hereinbelow.

As a result, the user may be able to access the internet with her second client device through the secure hotspot rather than through communication over a public access point that may prove malicious, as described in further detail hereinabove.

Thus, in some embodiments of the present inventions, a method of secure hotspot set-up is implemented on a computer processor of a first client device that is programmed to perform the steps of the method, say on a laptop computer or work cell phone of an employee of a bank, government agency, business or other enterprise.

In the method, the first client device receives a request to setup a secure hotspot for the entity. Then, based on the received request, there is automatically setup the hotspot for providing a second client device (say the same user's cellular phone, second laptop computer, tablet computer, etc.) with access to a wide area network such as the internet, via the hotspot.

Optionally, the hotspot is also setup for authenticating the second client device using an authentication server in remote communication with the first client device, based on credential data of the second client device, received on the first client device, and on authorization data defined by the entity and stored on the authentication server.

Optionally, the hotspot is setup with an attack detection capability too, as described in further detail hereinbelow.

Optionally, the request to setup the hotspot is received from the second client device (say upon detection of the presence of the first client device).

Optionally, the request to setup the hotspot is received from a server computer in use by the entity, say upon receiving an indication that the second client device is located in proximity to the first client device, upon the server computer losing a connection to the second client device, etc., as described in further detail hereinbelow.

Optionally, the request to setup the hotspot is issued on the first client device itself rather than on the second client device or a server computer.

In one example, the request is issued by the first client device whenever the first client device detects the second client device's presence in proximity to the first client device, say based on a Bluetooth^{™} or Wi-Fi signal with which the second client device reveals itself to nearby devices, as described in further detail hereinbelow.

In a second example, the first client device carries out a scan for active access points that are allowable according to a criterion predefined (say by one of the entity's system administrators or other Information Technology Professionals), and upon failing to find such an allowable access point in the scan, issues the request.

In a third example, the first client device issues the request whenever a communication channel - say a specific Corporate LAN (Local Area Network) or a 4G (4th generation) cellular network, as predefined, say by one of the entity's system administrators - is available to the first client device.

The very setup of the hotspot provides the user (say employee) with an option that is more trustworthy than public access points to the internet (or other wide area network), especially access points that the user is not familiar with, thus potentially avoiding malicious attacks of the sort described in further detail hereinabove.

Further, the hotspot may be setup for authenticating the second client device using a security protocol (say a WPA-Enterprise based protocol) preselected, say by a system administrator or other IT professional of the user's employer, as is thus also likely to be less susceptible to malicious attacks.

A client device of the present embodiments may include, but is not limited to any device used for wireless communications.

For example, the client device may include, but is not limited to wireless devices such as mobile phones (say smart phones), mobile terminals, Laptop Computers, Handheld Point-of-Sale (POS) Devices, Tablet Computers, Desktop Computers, wearable devices such as smart watches, internet connectable medical devices etc., as known in the art.

The exemplary client devices may additionally or alternatively include a variety of devices with internet connectivity (commonly referred to today as Internet-of-Things (IOT) devices) and other devices that can connect wirelessly to a communication network, as known in the art.

The principles and operation of an apparatus and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings.

The invention is capable of other embodiments or of being practiced or carried out in various ways. Also, it is to be understood that the phraseology and terminology employed herein is for the purpose of description and should not be regarded as limiting.

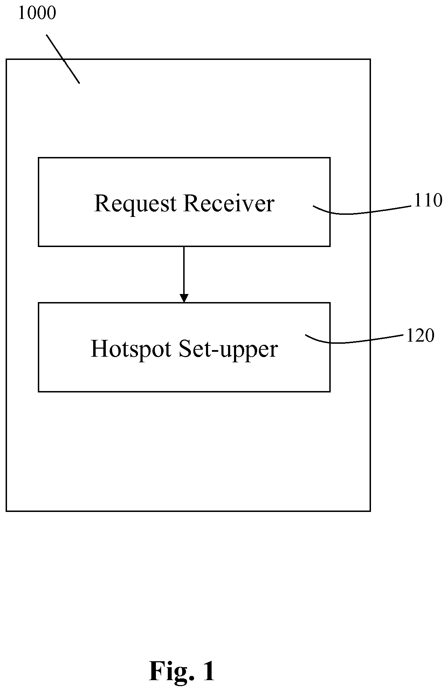

Reference is now made to Fig. 1, which is a simplified block diagram schematically illustrating a first exemplary apparatus for secure hotspot set-up, according to an exemplary embodiment of the present invention.

An apparatus 1000 for distributed wireless communications access security, according to one exemplary embodiment of the present invention, is implemented on a client device that is equipped with a computer processor and with other hardware and software components, as known in the art.

The client device also includes communications hardware and software components (say drivers and communications cards) for wireless communication to a wireless access point such as a Cellular Telephony Network's base station, a hotspot on a mobile device, etc., as known in the art.

The client device may include but is not limited to: a smart mobile phone, a tablet computer, a laptop computer, a handheld POS device, a desktop computer, etc., as described in further detail hereinabove.

The apparatus 1000 includes the client device's computer processor and one or more additional parts described in further detail hereinbelow, such as the parts denoted 110 -120 in Fig. 1.

The additional parts may be implemented as software, say by programming the computer processor to execute steps of the first exemplary method described in further detail hereinbelow.

For example, one or more of parts 110 - 120 may be implemented as a part of a client computer application such an iPhone^{®} App, which may be downloaded to the user's smart cellular phone (say an Apple^{®} iPhone or a Samsung^{®} Galaxy cellular phone) or tablet computer (say an Apple^{®} iPad), as known in the art.

The client computer application may be installed by the employee's employer (say by a computer programmer or operator), downloaded by the user from the Apple^{®} App Store or from Google^{®} Play, etc., as known in the art.

To protect their computing resources (say organizational information systems), many enterprises use strong communications security methods such as the WPA-Enterprise Protocol, EAP authentication, etc., on wireless networks setup by the enterprises in their office, on company laptops, etc.

Indeed, very often, a corporate user may use only wireless network secured with a strong protocol such as the WPA-Enterprise protocol when working on a first client device such as a company's desktop computer, laptop computer etc., at her work or even at home, as described in further detail hereinbelow.

However, when the user is at a public place such as a restaurant, a hotel, etc., the user may use a less secured wireless network (say a public Wi-Fi hotspot that uses a simple password for all users rather than user-specific passwords, encryption, etc.), as described in further detail hereinabove.

That is especially the case when the user uses a second client device - i.e. a client device other than the client device that she regularly uses for work (say her private smart phone or tablet), since such client devices are very often not set up for secured connectivity based on strong protocols like the WPA-Enterprise protocol.

As a result, the corporate user may expose her client device, data and communication with corporate servers, etc., as described in further detail hereinabove.

Thus, according to some embodiments, a user (say employee) carries with her two client devices. One of the devices has certain secure communication capabilities (say of supporting an encryption protocol selected by the employee's employer or of using a white list of access points allowed by the employer). However, the second device (say the user's private cellular phone) does not have such secure communication capabilities.

With the exemplary apparatus 1000, a secure hotspot (say a secure Wi-Fi hotspot) may be automatically setup on the first client device, say upon detection of the second client device's (say cellular phone's) presence in proximity to the first client device, as described in further detail hereinbelow.

As a result, the user may be able to access the internet (or other wide area network) through the secure hotspot rather than through communication over a public access point that may prove malicious, as described in further detail hereinabove.

The first exemplary apparatus 1000 further includes a request receiver 110.

The request receiver 110 receives a request to setup a secure hotspot for an entity such as a government agency, a bank, a corporation or other enterprise, as described in further detail hereinbelow.

The first exemplary apparatus 1000 further includes a hotspot set-upper 120 in communication with the request receiver 110.

Based on the received request, the hotspot set-upper 120 automatically sets up the hotspot for providing a second client device (say the employee's private cellular phone, laptop computer, tablet, etc.) with access to a wide area network such as the internet, as described in further detail hereinbelow.

Optionally, the hotspot set-upper 120 further sets up the hotspot for authenticating the second client device using an authentication server in remote communication with the first client device.

In one example, the authentication server authenticates the second client device based on credential data of the second client device or of the second client device's user (say a digital certificate) as received on the first client device, and on authorization data previously defined by the entity and stored on the authentication server.

Optionally, the hotspot set-upper 120 further sets up the hotspot with an attack detection capability, say with heuristics based anti-virus software, with anti-virus software developed and maintained by the entity, etc., as known in the art.

Optionally, the request receiver 110 receives the request to setup the hotspot from the second client device. In one example, the second client device sends the request to the first client device whenever the second client device detects the first client device's presence (say by receiving a Blutooth^{™} or Wi-Fi signal with which the first client device reveals itself to nearby devices, as known in the art).

Optionally, the request receiver 110 receives the request from a server computer used by the entity, say when the server computer detects the second client device's location near the first client device, when the server computer loses a connection to the second client device, etc., as described in further detail hereinbelow.

Optionally, the apparatus 1000 further includes a request issuer (not shown), in communication with the request receiver 110.

The request issuer of apparatus 1000 issues the request to setup the hotspot on the first client device itself rather than on the second client device, server computer, or other computer.

Optionally, the apparatus 1000 further includes a presence detector in communication with the request issuer of apparatus 1000.

The presence detector detects presence of the second client device, and upon the detection of the presence of the second client device, apparatus 1000's request issuer issues the request to setup the hotspot on the first client device for the entity (say enterprise).

In one example, the presence detector detects the second client device's presence in proximity to the first client device by receiving a signal transmitted by the second client device (say a signal predefined by a programmer or operator of the apparatus 1000).

For example, the signal may be a unique Blutooth^{™}, Wi-Fi, or other short range signal, say a few specific broadcasted frames, a signal with which the second client device reveals itself to nearby devices (say with an SSID (Service Set Identifier)), etc., as known in the art.

Optionally, the apparatus 1000 further includes a scanner in communication with the request issuer.

The scanner carries out a scan for active access points allowable according to a predefined criterion, say a criterion defined in advance by one of the entity's employees, by a programmer of apparatus 1000, by a system administrator of the apparatus 1000, etc.

Optionally, the request issuer issues the request whenever the scan fails to find an access point allowed according to the predefined criterion

Optionally, the request issuer issues the request whenever the scan fails to find an access point that is allowed according to the predefined criterion and has a signal of an intensity (as measured by the scanner) higher than a predefined threshold.

The threshold is defined in advance by one of the entity's employees, by a programmer of apparatus 1000, by a system administrator of the apparatus 1000, etc.

Optionally, the apparatus 1000 further includes a channel availability determiner, in communication with the request issuer.

The channel availability determiner determines whether a predefined communication channel is available to the first client device. The predefined channel may be, for example, a specific Corporate LAN (Local Area Network), a 4G (4th generation) cellular network, etc., as defined in advance, say by one of the entity's system administrators.

Optionally, the request issuer issues the request whenever the channel availability determiner determines that the predefined communication channel is available to the first client device.

Optionally, the apparatus 1000 further includes a location detector, in communication with the request issuer.

In one example, the location detector uses a GPS Receiver or other component installed on the first client device, to detect the first client device's location.

Optionally, the request issuer issues the request whenever the detected location is in a geographical area predefined by the entity (say by one of the entity's IT workers).

Optionally, the apparatus further includes a one-click GUI (Graphical User Interface) that allows a user of the first client device to simply click on an icon or on another GUI element presented on a screen of the first client device, for triggering an issuance of the request by the request issuer.

The very setup of the hotspot in response to the request received by the request receiver 110, provides the user (say employee) with an option that is more trustworthy than public access points to the internet (or other wide area network), thus potentially avoiding malicious attacks of the sort described in further detail hereinabove.

However, optionally, the hotspot set-upper 120 further setups the hotspot for authenticating the second client device using a preselected security protocol (say a WPA-Enterprise based protocol). The security protocol may be selected in advance, say by a system administrator or other IT professional of the entity (say the user's employer). As a result, the hotspot may also prove to be less susceptible to malicious attacks.

Optionally, the hotspot is setup to authenticate the second client device using a remote authentication server such as a RADIUS (Remote Authentication Dial-In User Service) Server (say a one operated by the entity or rather a one operated by a third party), as described in further detail hereinbelow.

Thus, in one example, after the second client device establishes a wireless connection to the hotspot setup by the hotspot set-upper 120, the second device has to provide the first client device with credential data (say a digital certificate), as known in the art.

In the example, when the first client device receives the credential data, the credential data is forwarded to the authentication server and used for authenticating the second client device as a one authorized to access a computing resource (say a computer or database) of the entity for which the hotspot is setup.

Optionally, at least some of the credential data is biometric data such as the user's fingerprint, facial recognition data extracted from an image of the second client device's user (say the employee) as captured live by a camera installed on the second client device, etc., as known in the art.

The authentication server may also use one or more authentication methods, say a one that uses user-specific usernames and passwords (say EAP-PSK), a one based on certificates (say EAP-TLS), etc., as known in art.

Optionally, the apparatus 1000 further includes a secure connection establisher, in communication with the request receiver 110.

The secure connection establisher establishes a connection to a secure network (say a 3G/4G network, a corporate LAN, a corporate WPA-EAP connection, etc.), and intermediates between the hotspot and the secure network, thus allowing devices such as the second client device to connect to the secure network, via the hotspot.

Optionally, the apparatus 1000 further includes a secure connection monitor, in communication with the secure connection establisher.

The secure connection monitor continuously monitors the connection to the secure network, to the second client device, or to both, say for detecting connectivity attack attempt.

Optionally, the apparatus 1000 further includes an attack alerter, in communication with the secure connection monitor.

When the secure connection monitor detects an attempted connectivity or communication attack attempt, the attack alerter presents an alert message on a screen of the first client device, and optionally, also turns off the hotspot.

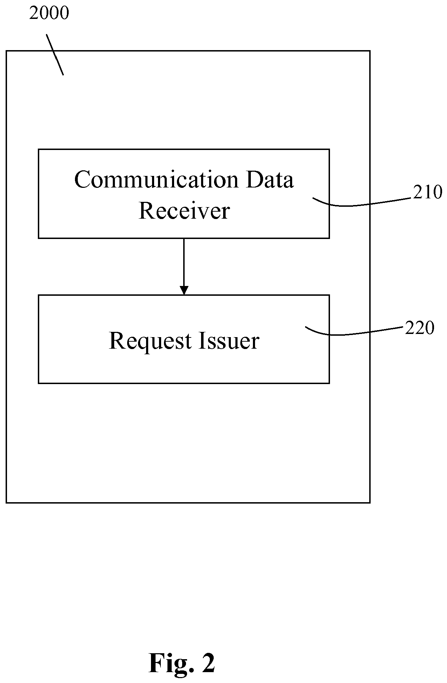

Reference is now made to **Fig. 2****,** which is a simplified block diagram schematically illustrating a second exemplary apparatus for secure hotspot set-up, according to an exemplary embodiment of the present invention.

An apparatus 2000 for secure hotspot set-up, according to one exemplary embodiment of the present invention, is implemented on a server computer which communicates with client devices such as a smart mobile phone, a tablet computer, a laptop computer, etc., as described in further detail hereinabove. The server computer may actually include two or more networked computers, as known in the art.

Optionally, the apparatus 2000 is implemented on a server computer of an entity (say an organization such as a government agency, a bank or other corporation), which server computer is in communication with client devices in use by the organization's employees, agents, suppliers, customers, other business partners, etc.

Optionally, the apparatus 2000 is implemented on a server computer of a party other than the entity, which server computer is in communication with client devices in use by the entity's employees, agents, suppliers, customers, business partners, etc., with a server computer of the entity itself, or with both.

The apparatus 2000 includes the server computer's computer processor and one or more additional parts as described in further detail hereinbelow, such as the parts denoted 210 - 220 in **Fig. 2****.**

The additional parts may be implemented as software - say by programming the computer processor to execute steps of the first exemplary method as described in further detail hereinbelow, by hardware - say by electric circuits, computer memories, etc., or any combination thereof.

Thus, in one exemplary embodiment, the exemplary second apparatus 2000 includes the computer processor of the server computer.

The apparatus 2000 further includes a communication data receiver 210, implemented on the computer processor.

The communication data receiver 210 receives data on a communication status of the second client device.

Optionally, the received data indicates that no access point that is allowable according to a policy defined in advance by the entity is available to the second client device.

Thus, in one example, in a preliminary step, a computer in use by the entity provides client devices in use by the entity's employees with a list of allowable access points (i.e. a white list), as known in the art.

Later, a Wi-Fi scan carried out by a scanner implemented on the second client (say by computer code) device detects a few wireless access points. However, none of the detected access points appear in the white list.

Accordingly, the second client device sends data that indicates that no allowable access point is available to the second client device (i.e. data on the communication status of the second client device), to the communication data receiver 210 (i.e. to the server computer), as described in further detail hereinbelow.

Optionally, the received data rather indicates a falling of an intensity of a signal of an allowable access point received by the second client device below a predefined threshold (say a threshold embedded in the computer code that implements the scanner).

Thus, in one example, the second client device communicates over the internet via a first access point allowable according to the white list received from the entity's computer.

When the signal of the access point falls below the threshold, a Wi-Fi scan carried out by the second client device detects a few wireless access points other than the first access point. However, none of the access points that are detected in the scan appear in the white list.

Accordingly, the second client device sends data that indicates the falling of the intensity of the signal of the allowable access point below the threshold (i.e. data on the communication status of the second client device), to the communication data receiver 210 (i.e. to the server computer), as described in further detail hereinbelow.

Optionally, the received data rather indicates that the second client device is in proximity to the first client device, as described in further detail hereinbelow.

In one example, both devices send geographical location (say GPS) data to the server computer.

In one case, the geographical location data received from the two devices reveal that the two devices are in geographical proximity to each other, with which proximity the two devices are likely to be connectable over a short range wireless connection that may be based on Wi-Fi, Bluetooth^{™}, etc. Accordingly, in that case, a software component implemented on the server computer sends data that indicates that proximity (i.e. the data on the communication status of the second client device), to the communication data receiver 210, as described in further detail hereinbelow.

Thus, the data on the communication status may be received from the first client device, from the second client device, from a software component in communication with one or two of the two client devices, etc., as described in further detail hereinbelow. The software component may be implemented on the server computer or on a computer in communication therewith.

The apparatus 2000 further includes a request issuer 220 in communication with the communication data receiver 210.

The request issuer 220 issues a request for the first client device to automatically setup a hotspot providing the second client device with access to a wide area network (say the internet), based on the data received by the communication data receiver 210, as described in further detail hereinbelow.

Optionally, the apparatus 2000 further includes a communication diversion instructor, in communication with the communication data receiver 210, the request issuer 220, or both.

The communication diversion instructor instructs the second client device to divert wireless communication to the hotspot.

In one example, the request issuer 220 receives confirmation data from the first client device. The confirmation data indicates the hotspot's opening by the first client device, possibly with one or more details usable for identifying the hotspot (say an SSID (Service Set Identifier)) and for connecting to the hotspot. Then, the communication diversion instructor instructs the second client device to divert wireless communication to the hotspot, say by forwarding data based on the confirmation data received by the request issuer 220 to the second client device.

In one case of the example, upon being instructed by the communication diversion instructor (say upon receipt of the data based on the confirmation data), the second client device immediately switches from a first access point to the hotspot. In a second case, the second client device switches to the hotspot later, say upon the first access point's signal being so weak, such that the second client device can no longer communicate with the first access point.

Optionally, the second client device need not be instructed to switch to the hotspot. For example, the second client device may connect to the hotspot automatically based on predefined data that identifies the hotspot (say the hotspot's SSID). The data may be defined in advance, say by embedding the data in a software component implemented on the second client device, by a programmer, as described in further detail hereinbelow.

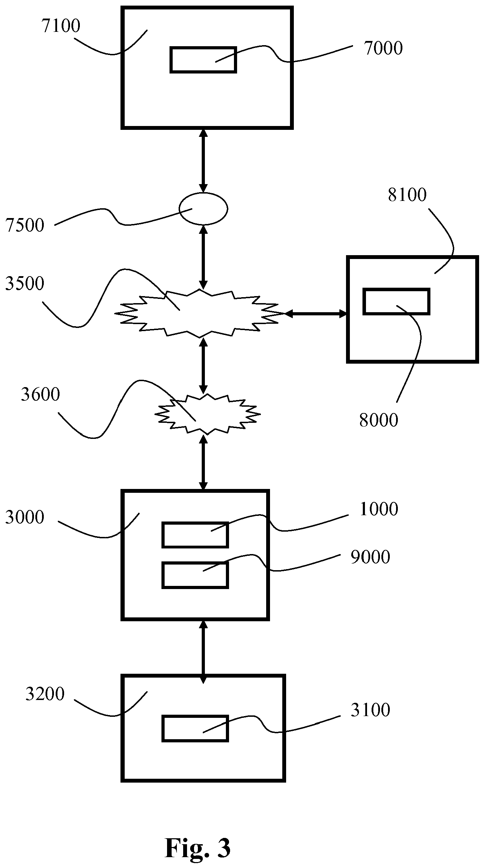

Reference is now made to **Fig. 3****,** which is a simplified block diagram schematically illustrating an exemplary system for secure hotspot set-up, according to an exemplary embodiment of the present invention.

An exemplary system for secure hotspot set-up, according to one exemplary embodiment of the present invention, includes apparatus 1000 implemented on the first client device 3000, say as a client computer application, as described in further detail hereinabove.

The exemplary system further includes a second apparatus 3100 implemented on a second client device 3200, as described in further detail hereinbelow.

The second client device 3200 includes a computer processor and communications hardware and software components (say drivers and cards), for wireless communication to a wireless access point such as a Cellular Telephony Network's base station, to a hotspot on a mobile device, etc.

The second client device 3200 may include but is not limited to: a smart mobile phone, a tablet computer, a laptop computer, a handheld POS device, a desktop computer, etc., say a private device in use by an enterprise employee who carries both devices 3000, 3200 with her, as described in further detail hereinabove.

Thus, the second apparatus 3100 includes the second client device's 3200 computer processor and one or more additional parts, as described in further detail hereinbelow.

One or more of parts of the second apparatus 3100 may be implemented as a client computer application such an iPhone^{®} App, which may be downloaded to the user's second client device (say an Apple^{®} iPhone, Samsung^{®} Galaxy cellular phone, Apple^{®} iPad tablet computer), etc., as known in the art.

The client computer application may be installed by the employee's employer (say by a computer programmer or operator), downloaded by the user (say employee) herself from the Apple^{®} App Store or from Google^{®} Play, etc., as known in the art.

With the exemplary system, a secure hotspot (say a secure Wi-Fi hotspot) may be automatically setup on the first client device 3000, say upon the first client device's 3000 detecting a presence of the second client device 3200, as described in further detail hereinabove.

As a result, the user may be able to access the internet 3500 (or another wide area network) through the secure hotspot setup on the first client device 3000. The first client device 3000 thus bridges between the second client device 3200 and the internet (or other wide area network) 3500.

More specifically, in the example, the first client device 3000 is connected to the second client device 3200 over a WPA-Enterprise link, using the hotspot setup on the first client device - on the one hand, and to the internet 3500 (say via a cellular network 3600) in a secure link - on the other hand. The first client device 3000 thus bridges between the two links.

Optionally, the hotspot setup on the first client device 3000 further authenticates the second client device using an authentication server in remote communication with the first client device 3000, as described in further detail hereinabove.

In one example, the authentication server 7100 is operated by the entity (say a government agency, corporation, other enterprise, etc.) who owns the first client device 3000 (say by an employer of a user of the first client device 3000), say on an internet web server 7100 protected using a firewall 7500, as known in the art.

In a second example, the authentication server 8000 is rather operated by a third party - i.e. a party that is neither the employee nor the employer, say on one or more of the third party's server computers 8100.

In one example, the authentication server authenticates the second client device 3200 based on credential data of the second client device 3200 or of the device's 3200 user (say a digital certificate) as received on the first client device 3000.

In the example, the first client device forwards the credential data to the authentication server. Then, the authentication server may authenticate the second client device based on the credential data and on authorization data previously defined by the entity and stored on the authentication server, as described in further detail hereinbelow.

Optionally, the apparatus 1000 implemented on the first client device 3000 further includes an attack detection capability implemented as a module 9000 that is a part of the hotspot or rather, as a separate module 9000 in communication with the hotspot. The module 9000 may detect malicious attack using heuristics based anti-virus software, anti-virus software developed and maintained by the entity, etc., as known in the art.

Optionally, the first client device 3000 receives a request to setup the hotspot from the second client device 3200, as described in further detail hereinabove.

In one example, the apparatus 3100 implemented on the second client device 3200 sends the request to the first client device 3000 whenever the second client device 3200 detects a presence of the first client device 3000. Optionally, the second client device detects the first client device's presence by receiving a Blutooth^{™} or Wi-Fi signal with which the first client device 3000 reveals itself to nearby devices, etc., as known in the art.

Optionally, the first client device 3000 sets up the hotspot based on a request issued on the first client device 3000 itself, as described in further detail hereinabove.

In one example, the first client device 3000 detects the second client device's 3200 presence in proximity to the first client device 3000, by receiving a signal transmitted by the second client device 3200, as described in further detail hereinabove.

For example, the signal may be a unique Blutooth^{™} or Wi-Fi signal, say a few specific broadcasted frames, a signal with which the second client device 3200 reveals itself to nearby devices (say with an SSID (Service Set Identifier)), etc., as described in further detail hereinbelow.

Optionally, the first client device 3000 sets up the hotspot based on a request received from a computer server in use by an entity that employs the user of the second apparatus 3200, as described in further detail hereinabove.

Optionally, upon the hotspot's being setup on the first client device 3000 and being open for communication, the apparatus 3100 implemented on the second client device 3200 automatically diverts wireless communication to the hotspot setup on the first client device 3000.

In one example, the automatic diversion is based on an agreed-upon name or other identification data (say SSID) that the hotspot is to be setup with.

In the example, every few minutes, the apparatus 3100 implemented on the second client device 3200 carries out a Wi-Fi scan for detecting access points and hotspots. Whenever detecting the secure hotspot in the scan, using the agreed-upon name or other identification data, the second client device 3200 automatically diverts wireless communication to the hotspot setup on the first client device 3000.

Alternatively or additionally, the second client device 3200 diverts wireless communication to the hotspot setup on the first client device 3000 upon receipt of an instruction, say from the remote server in use by the entity that employs the user of the second client device 3200, as described in further detail hereinabove.

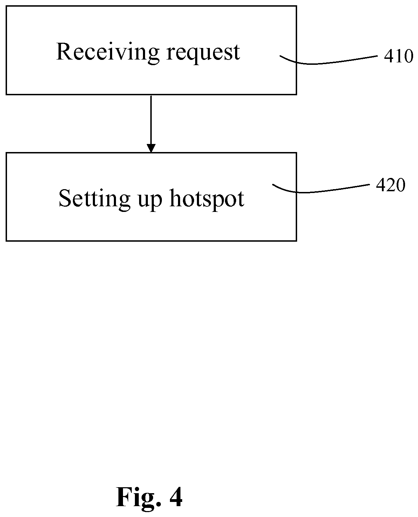

Reference is now made to **Fig. 4****,** which is a simplified flowchart illustrating a first exemplary method of secure hotspot set-up, according to an exemplary embodiment of the present invention.

A first exemplary method of secure hotspot set-up may be executed by a computer processor of a client device, say by a client device in use by an employee of an enterprise such as a bank, a government agency, another business, etc., as described in further detail hereinabove.

The client device may include but is not limited to: a smart mobile phone, a tablet computer, a laptop computer, a handheld POS device, a desktop computer, etc., as described in further detail hereinabove.

More specifically, in one example, the first exemplary method is executed by a client computer application such as an iPhone^{®} App which may be downloaded to the client device (say a handheld terminal, a smart phone such as an Apple^{®} iPhone or a Samsung^{®} Galaxy cellular phone or a tablet computer such as an Apple^{®} iPad).

The client computer application may be installed by the employee's employer (say by a computer programmer or operator), be downloaded from the Apple^{®} App Store or from Google^{®} Play by the user (say employee) herself, etc., as known in the art.

To protect their computing resources (say organizational information systems), many enterprises use strong communications security methods such as the WPA-Enterprise Protocol, EAP authentication, etc., on wireless networks setup by the enterprises in their office, on company laptops or other client devices, etc.

Indeed, very often, a corporate user may use only wireless networks that are secured with a strong protocol such as the WPA-Enterprise protocol when working on a first client device such as a company desktop or laptop computer, etc., at her work or at home.

However, when the user is at a public place such as a restaurant, a hotel, etc., the user may use a less secured wireless network (say a public Wi-Fi hotspot that uses a simple password that is not user-specific rather than encryption, user-specific passwords, etc.), as described in further detail hereinabove.

That is very often the case when the user uses a second client device - i.e. a client device other than the client device that she regularly uses for work (say her private smart phone or tablet), since such client devices are very often not set up for secured connectivity based on strong protocols like the WPA-Enterprise protocol.

As a result, the corporate user may expose her client device, its data and its communication with corporate servers, etc., as described in further detail hereinabove.

Thus, according to some embodiments, a user (say employee) carries with her two client devices. A first one of the devices has certain secure communication capabilities (say of supporting an encryption protocol selected by the employee's employer or of using a white list of access points allowed by the employer).

However, the second device (say the user's private cellular phone) does not have such secure hotspot set-up capabilities.

According to the first exemplary method, a secure hotspot (say a secure Wi-Fi hotspot) may be automatically setup on the first client device, say upon detection of a presence of the second client device (say cellular phone) in proximity to the first client device, as described in further detail hereinabove.

As a result, the user may be able to access the internet through the secure hotspot rather than through communication over a public access point that may prove malicious, as described in further detail hereinabove.

In the method, there is received 410 a request to setup a secure hotspot for an entity such as a government agency, a bank, a corporation or other enterprise, say by the request receiver 110, as described in further detail hereinabove.

Then, based on the received 410 request, there is automatically setup 420 the hotspot for providing a second client device (say the employee's private cellular phone, laptop computer, tablet, etc.) with access to a wide area network such as the internet, say by the hotspot set-upper 120, as described in further detail hereinabove.

Optionally, the hotspot is further setup 420 for authenticating the second client device using an authentication server in remote communication with the first client device.

The authentication server may authenticate the second client device based on credential data of the second client device as received on the first client device and forwarded to the authentication server, and on authorization data defined by the entity and stored on the authentication server, as described in further detail hereinabove.

Optionally, the hotspot is further setup 420 with an attack detection capability say with heuristics based anti-virus software, with anti-virus software developed and maintained by the entity, etc., as known in the art.

Optionally, the request to setup the hotspot is received 420 from the second client device.

In one example, the second client device sends the request to the first client device whenever the second client device detects the first client device's presence, say by receiving a short Blutooth^{™} or Wi-Fi signal with which the first client device reveals itself to nearby devices, as described in further detail hereinabove.

Optionally, the request is rather received 410 from a server computer in use by the entity.

In one example, the server computer sends the request to the first client device whenever the server computer detects that the second client device is located in proximity to the first client device, or loses a connection to the second client device, etc., as described in further detail hereinbelow.

Optionally, the request to setup the hotspot is issued on the first client device itself rather than on the second client device, server computer, or other computer.

Thus, in one example, the request is issued by the first client device upon the first client device's detecting the second client device's presence in proximity to the first client device, say by receiving a short ranged signal transmitted by the second client device, as described in further detail hereinabove.

Optionally, the signal is a unique Blutooth^{™} or Wi-Fi signal, say one or more broadcasted frames as predefined say by a system administrator or programmer of apparatus 1000, say a signal with which the second client device reveals itself to nearby devices, say with an SSID (Service Set Identifier), as known in the art.

In a second example, the first client device carries out a scan for active access points that are allowable according to a criterion predefined (say by one of the entity's system administrators or other Information Technology Professionals), and upon failing to find an allowable access point in the scan, issues the request.

In a third example, the first client device carries out the scan for the active access points that are allowable according to the predefined criterion, and upon failing to find an allowable access point that has a signal of an intensity higher than a predefined threshold in the scan, issues the request.

The threshold may be defined in advance, say by one of the entity's system administrators or other Information Technology Professionals, as described in further detail hereinabove.

In a fourth example, the first client device issues the request whenever a communication channel - say a specific Corporate LAN (Local Area Network) or a 4G (4th generation) cellular network, as predefined, say by one of the entity's system administrators, is available to the first client device.

In a fifth example, the first client device further uses a GPS Receiver or other component installed on the first client device, to detect the first client device's location. In the example, the first client device issues the request whenever the detected location of the first client device is in a geographical area predefined by the entity (say by one of the entity's IT workers).

In a sixth example, a one-click GUI (Graphical User Interface) allows a user of the first client device to simply click on an icon or on another GUI element presented on a screen of the first client devices, for issuing the request.

The very setup 420 of the hotspot provides a user (say the employee) with an option that is more trustworthy than public access points to the internet (or other wide area networks), thus potentially avoiding malicious attacks of the sort described in further detail hereinabove.

Further, the hotspot may also be setup 420 for authenticating the second client device using a security protocol (say a WPA-Enterprise based protocol) that is preselected, say by an IT professional of the entity (say the enterprise that is the user's employer), as is thus also likely to be less susceptible to malicious attacks.

Optionally, the second client device is authenticated using a remote authentication server such as a RADIUS (Remote Authentication Dial-In User Service) Server, say a one operated by the entity or rather a one operated by a third party.

Thus, in one example, after the second client device establishes a wireless connection to the setup 420 hotspot, the second device has to provide the first client device with credential data (say a digital certificate of the employee who uses the second client device or rather of the device itself).

In the example, the first client device receives the credential data and forwards the credential data to the authentication server. The authentication server uses the credential data for authenticating the second client device as a device authorized to access a computing resource (say a computer or database) of the entity for which the hotspot is setup 420, using authorization data defined in advance by the entity and stored on the authentication server.

Optionally, at least some of the credential data is biometric data such as the user's fingerprint, facial recognition data extracted from an image of the second client device's user (say the employee) as captured live by a camera installed on the second client device, etc., as known in the art.

The authentication server may also use one or more authentication methods, such as a one based on user-specific username and password (say EAP-PSK), a one based on certificates (say EAP-TLS), etc., as known in art.

Optionally, the exemplary method further includes establishing a secure connection to a secure network (say a 3G/4G network, a corporate LAN, a corporate WPA-EAP connection, etc.). The method may further include intermediating between the hotspot and the secure network, thus allowing devices such as the second client device to connect to the secure network, via the hotspot.

Optionally, the exemplary method further includes continuously monitoring the connection to the secure network, to the second client device, or to both - say for detecting any connectivity and communication attack attempts.

Optionally, the method further includes a step in which, if such an attempted attack is detected, an alert is presented on a screen of the first client device, and optionally, the hotspot is turned off too.

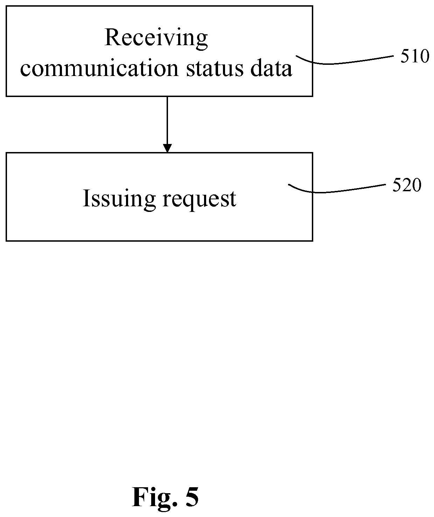

Reference is now made to **Fig. 5****,** which is a simplified flowchart illustrating a second exemplary method of secure hotspot set-up, according to an exemplary embodiment of the present invention.

A second exemplary method of secure hotspot set-up may be executed by a computer processor of a server computer that communicates with client devices such as a smart mobile phone, a tablet computer, a laptop computer, etc., as described in further detail hereinabove. The server computer may actually include two or more networked computers, as known in the art.

Optionally, the method is implemented on a server computer of an entity (say an organization such as a government agency, bank or other enterprise), which server computer is in communication with client devices in use by the organization's employees, agents, suppliers, customers, other business partners, etc.

Optionally, the method is implemented on a server computer of a party other than the entity, say a one in communication with client devices in use by the entity's employees, agents, suppliers, customers, business partners, etc., with a server computer of the entity, or with both, as described in further detail hereinabove.

In the second method, there is received 510 data on a communication status of the second client device, say by the communication data receiver 210, as described in further detail hereinabove.

Optionally, the received 510 data indicates that no access point that is allowable according to a policy defined in advance by the entity is available to the second client device.

Thus, in one example, in a preliminary step, a computer in use by the entity provides client devices in use by the entity's employees with a list of allowable access points (i.e. a white list), as known in the art.

Later, a scanner implemented on the second client device (say as a computer program that is a part of apparatus 2000) carries out a Wi-Fi scan that detects a few wireless access points. However, in the example, none of the detected access point appear in the white list.

Accordingly, the second client device sends data that indicates that no allowable access point is available to the second client device (i.e. data on the communication status of the second client device) to the server computer, as described in further detail hereinabove.

Optionally, the data rather indicates a falling of an intensity of a signal of an allowable access point received by the second client device below a predefined threshold (say a threshold embedded in computer code of the computer program).

Thus, in one example, the second client device communicates over the internet via a first access point allowable according to the white list received from the entity's computer.

When the signal of the access point falls below the threshold, a Wi-Fi scan carried out by the second client device detects a few wireless access points other than the first access point. However, none of the detected access points appear in the white list.

Accordingly, the second client device sends data that indicates the falling of the intensity of the signal of the allowable access point below the threshold (i.e. data on the communication status of the second client device), to the server computer, as described in further detail hereinabove.

Optionally, the data rather indicates that the second client device is in proximity to the first client device, as described in further detail hereinabove.

In one example, both devices send geographical location (say GPS) data to the server computer.

In one case, the data received from the two devices reveal that the two devices are in geographical proximity to each other, with which proximity the two devices are likely to be connectable over a short range wireless connection that may be based on a Wi-Fi, Bluetooth^{™}, or other short ranged signal. Accordingly, in that case, a software component implemented on the server computer sends data that indicates that proximity (i.e. the data on the communication status of the second client device), to the communication data receiver 210, as described in further detail hereinabove.

Thus, the data on the communication status may be received 510 from the first client device, from the second client device, from a software component in communication with one or two of the two client devices, etc., as described in further detail hereinabove. The software component may be implemented on the server computer or on a computer in communication therewith, etc.

The method further includes issuing 520 a request for the first client device to automatically setup a hotspot providing the second client device with access to a wide area network (say the internet), based on the received 510 data , say by the request issuer 220 of apparatus 2000, as described in further detail hereinabove.

Optionally, the method further includes instructing the second client device to divert wireless communication to the hotspot, say by the communication diversion instructor of apparatus 2000, as described in further detail hereinabove.

In one example, there is received confirmation data from the first client device, say by the request issuer 220. The confirmation data indicates the hotspot's opening by the first client device, possibly with one or more details usable for identifying the hotspot (say SSID) and for connecting to the hotspot. Then, the second client device is instructed to divert wireless communication to the hotspot, say by forwarding data based on the received confirmation data, as described in further detail hereinabove.

In one case of the example, upon being instructed (say by receipt of the data based on the confirmation data), the second client device immediately switches from an access point that the second client device is connected to, to the hotspot. In a second case, the second client device switches to the hotspot later, say upon the access point's signal being so weak, such that the second client device can no longer communicate with the access point.

Optionally, the second client device need not be instructed to switch to the hotspot, and connects to the hotspot automatically based on predefined data that identifies the hotspot (say the hotspot's SSID), whenever a scan carried out on the second client device finds the hotspot (say using the SSID). The data may be defined in advance, say by embedding the data in a software component implemented on the second client device, by a programmer, as described in further detail hereinabove.

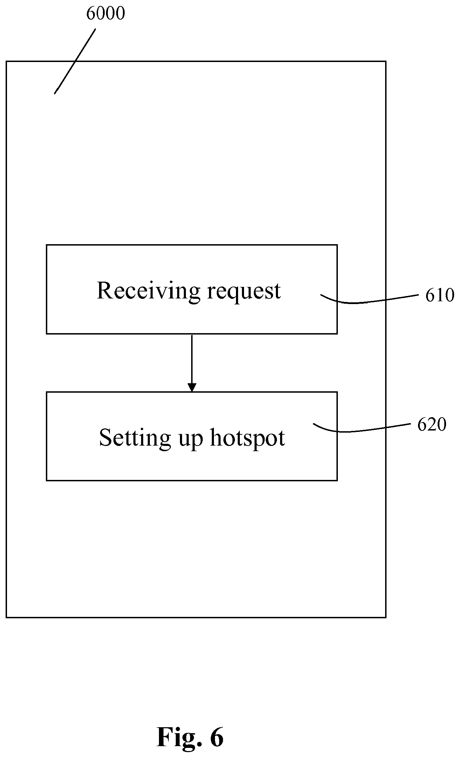

Reference is now made to **Fig. 6****,** which is a simplified block diagram schematically illustrating a first exemplary computer readable memory storing computer executable instructions for performing steps of secure hotspot set-up, according to an exemplary embodiment of the present invention.

According to an exemplary embodiment of the present invention, there is provided a non-transitory computer readable medium 6000 that stores computer executable instructions for performing steps of secure hotspot set-up on a client device, as described in further detail hereinabove.

The client device may include but is not limited to a smart cellular phone, a tablet computer, a laptop computer, a handheld POS terminal, a desktop computer, etc., or any device that can wirelessly communicate with a wireless access point or hotspot, as described in further detail hereinabove.

The computer readable medium 6000 may include, but is not limited to: a RAM (Rapid Access Memory), a DRAM (Dynamic RAM), a ROM (Read Only Memory), a PROM (Programmable ROM), an EPROM (Erasable ROM), a Micro SD (Secure Digital) Card, a CD-ROM, a Solid State Drive (SSD), a USB-Memory, a Hard Disk Drive (HDD), etc.

Optionally, the instructions are in a form of a computer application such an iPhone^{®} App that may be downloaded to the user's device (say Apple^{®} iPhone) or installed thereon, stored on the computer readable medium 6000 and executed on the device's processor, as described in further detail hereinabove.

The computer executable instructions include a step of receiving 610 a request to setup a secure hotspot for an entity such as a government agency, a bank, a corporation or other enterprise, as described in further detail hereinabove.

The computer executable instructions further include a step of automatically setting up 620 the hotspot for providing a second client device (say the employee's private cellular phone, tablet, etc.) with access to a wide area network such as the internet, based on the received 610 request, as described in further detail hereinabove.

Optionally, the hotspot is setup 620 for authenticating the second client device using an authentication server in remote communication with the first client device based on credential data of the second client device, received on the first client device, and on authorization data defined by the entity and stored on the authentication server.

Optionally, the hotspot is further setup 620 with an attack detection capability say with heuristics based anti-virus software, with anti-virus software developed and maintained by the entity, etc., as described in further detail hereinabove.

Optionally, the request to setup the hotspot is received 610 from the second client device, say when the second client device detects a presence of the first client, say by receiving a Blutooth^{™} or Wi-Fi signal with which the first client device reveals itself to nearby devices, as described in further detail hereinabove.

Optionally, the request is rather received 610 from a server computer in use by the entity, say when the server computer detects that the second client device is located in proximity to the first client device or when the server computer loses a connection to the second client device, etc., as described in further detail hereinabove.

Optionally, the computer executable instructions further include a step of issuing the request to set up the hotspot on the first client device itself rather than on the second client device, server computer, or on another computer.

Thus, in one example, the computer executable instructions issue the request on the first client device upon the first client device's detecting the second client device's presence, say by receiving a Bluetooth^{™} or Wi-Fi signal transmitted by the second client device, as described in further detail hereinabove.

In a second example, the computer executable instructions further include a step in which there is carried out a scan for active access points that are allowable according to a criterion predefined (say by one of the entity's system administrators or other Information Technology Professionals) on the first client device. In the second example, when the instructions fail to find an allowable access point in the scan, the instructions issue the request, as described in further detail hereinabove.

In a third example, the instructions issue the request whenever the scan fails to find an allowable access point that has a signal of an intensity higher than a predefined threshold in the scan, as described in further detail hereinabove.

In a fourth example, the computer executable instructions issue the request whenever a communication channel - say a specific Corporate LAN (Local Area Network) or a 4G (4th generation) cellular network, as predefined, say by one of the entity's system administrators, is available to the first client device.

In a fifth example, the computer executable instructions further include a step of detecting the first client device's geographical location, say using a GPS Receiver or other component installed on the first client device. In the example, the instructions issue the request whenever the detected location of the first client device is in a geographical area predefined by the entity (say by one of the entity's IT workers).

In a sixth example, the computer executable instructions further implement a one-click GUI (Graphical User Interface) that allows a user of the first client device to simply click on an icon or on another GUI element presented on a screen of the first client devices, for triggering issuance of the request by the instructions.

Optionally, the hotspot is further setup 620 for authenticating the second client device using a security protocol (say a WPA-Enterprise based protocol) that is preselected, say by a system administrator or other IT professional of the user's employer, as is thus also likely to be less susceptible to malicious attacks.

Optionally, the second client device is authenticated using a remote authentication server such as a RADIUS (Remote Authentication Dial-In User Service) Server, say a one operated by the entity or rather a one operated by a third party, as described in further detail hereinabove.

Thus, in one example, after the second client device establishes a wireless connection to the setup 620 hotspot, the second device has to provide the first client device with credential data (say a digital certificate of the employee who uses the second client device or rather of the device itself). In the example, the computer executable instructions further include a step of receiving the credential data and a step of forwarding the credential data to the authentication server.

The authentication server uses the credential data for authenticating the second client device as a device authorized to access a computing resource (say a computer or database) of the entity for which the hotspot is setup 620, using authorization data defined in advance by the entity and stored on the authentication server, as described in further detail hereinabove.

Optionally, the computer executable instructions further include a step of establishing a secure connection to a secure network (say a 3G/4G network, a corporate LAN, a corporate WPA-EAP connection, etc.). The instructions may further include steps of intermediating between the hotspot and the secure network, thus allowing devices such as the second client device to connect to the secure network, via the hotspot.

Optionally, the computer executable instructions further include a step of continuously monitoring the connection to the secure network, to the second client device, or to both - say for detecting any connectivity and communication attack attempts.

Optionally, the computer executable instructions further includes a step in which, if such an attempted attack is detected, an alert is presented on a screen of the first client device, and optionally, the hotspot is turned off too, as described in further detail hereinabove.

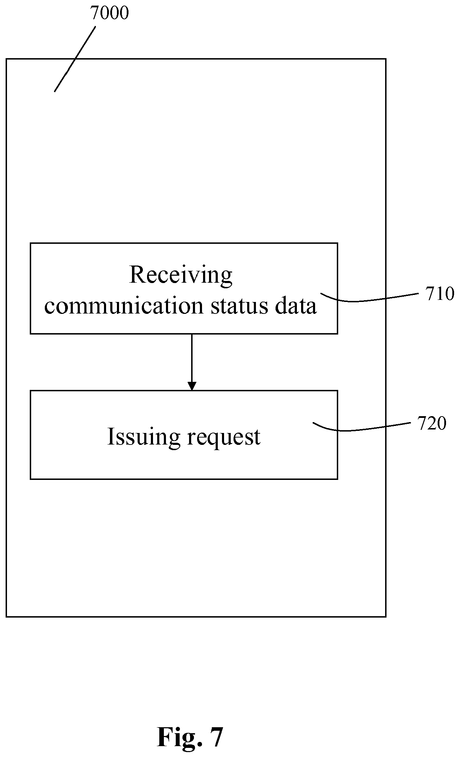

Reference is now made to **Fig. 7****,** which is a simplified block diagram schematically illustrating a second exemplary computer readable memory storing computer executable instructions for performing steps of secure hotspot set-up, according to an exemplary embodiment of the present invention.

According to an exemplary embodiment of the present invention, there is provided a non-transitory computer readable medium 7000 that stores computer executable instructions for performing steps of secure hotspot set-up on a server computer, as described in further detail hereinabove.

Optionally, the server computer belongs to the entity (say an organization such as a government agency, bank or other enterprise), and is in communication with client devices in use by the entity's employees, agents, suppliers, customers, other business partners, etc., as described in further detail hereinabove.

Optionally, the server computer belongs to a party other than the entity, though is in communication with client devices in use by the entity's employees, agents, suppliers, customers, business partners, etc., with a server computer of the entity, or with both, as described in further detail hereinabove.

The computer readable medium 7000 may include, but is not limited to: a RAM (Rapid Access Memory), a DRAM (Dynamic RAM), a ROM (Read Only Memory), a PROM (Programmable ROM), an EPROM (Erasable ROM), a Micro SD (Secure Digital) Card, a CD-ROM, a Solid State Drive (SSD), a USB-Memory, a Hard Disk Drive (HDD), etc.

The computer executable instructions include a step of receiving 710 data on a communication status of the second client device, as described in further detail hereinabove.

Optionally, the received 710 data indicates that no access point that is allowable according to a policy defined in advance by the entity, is available to the second client device.

Thus, in one example, in a preliminary step, a computer in use by the entity provides client devices in use by the entity's employees with a list of allowable access points (i.e. a white list), as known in the art.

Later, a Wi-Fi scan carried out by the second client device detects a few wireless access points. However, none of the detected access point appear in the white list.

Accordingly, the second client device sends data that indicates that no allowable access point is available to the second client device (i.e. data on the communication status of the second client device) to the server computer, as described in further detail hereinabove.

Optionally, the data rather indicates a falling of an intensity of a signal of an allowable access point received by the second client device below a predefined threshold (say a threshold embedded in computer code that implements the scanner).

Thus, in one example, the second client device communicates over the internet via a first access point allowable according to the white list received from the entity's computer.

When the signal of the access point falls below the threshold, a Wi-Fi scan carried out by the second client device detects a few wireless access points other than the first access point. However, none of the detected access points appear in the white list.

Accordingly, the second client device sends data that indicates the falling of the intensity of the signal of the allowable access point below the threshold (i.e. data on the communication status of the second client device), to the server computer, as described in further detail hereinabove.

Optionally, the received 710 data rather indicates that the second client device is in proximity to the first client device, as described in further detail hereinabove.

In one example, both client devices send geographical location (say GPS) data to the server computer.

In one case, the data received from the two devices reveal that the two devices are in geographical proximity to each other, with which proximity the two devices are likely to be connectable over a short range wireless connection that may be based on Wi-Fi, Bluetooth^{™}, etc. Accordingly, in that case, a software component implemented on the server computer itself sends data that indicates that proximity (i.e. the data on the communication status of the second client device) to the another software component implemented on the server computer, as described in further detail hereinabove.

Thus, the data on the communication status may be received 710 from the first client device, from the second client device, from a software component in communication with one or two of the two client devices and that is implemented on the server computer or on a computer in communication therewith, etc.

The computer executable instructions further include a step of issuing 720 a request for the first client device to automatically setup a hotspot providing the second client device with access to a wide area network (say the internet), based on the received 710 data, as described in further detail hereinabove.

Optionally, the computer executable instructions further include a step of instructing the second client device to divert wireless communication to the hotspot, as described in further detail hereinabove.

It is expected that during the life of this patent many relevant devices and systems will be developed and the scope of the terms herein, particularly of the terms "Computer", "Processor", "Server Computer", "Client Device", "Access Point", "Hotspot", "Tablet", "Smart Phone", "Laptop", "CD-ROM", "USB-Memory", "Hard Disk Drive (HDD)", "Solid State Drive (SSD)", "DRAM", "ROM", "PROM", "EPROM", "DRAM", "Micro SD", "Wi-Fi", "WLAN", "SSID", "WLAN", and "Internet" is intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A computer implemented method of secure hotspot set-up, the method comprising steps a computer processor of a first client device of a user is programmed to perform, the steps comprising:
a) on the first client device of the user, the first client device being used by the user and implementing a security protocol pre-selected by an entity to communicate with the user, receiving (410) a request to setup a secure hotspot allowing the first client device of the user to bridge between a wide area network and a second client device of the user, the request being received from the first client device of the user upon being present in a geographical area predefined by the entity; and
b) based on the received request, setting up (420) the hotspot for providing the second client device of the user with access to the wide area network, the first client device of the user using the security protocol pre-selected by the entity to communicate with the user when the first client device is bridging between the second client device of the user and the wide area network and the second client device is connected to the set-up hotspot.

2. The method defined by claim 1, wherein said setting up of the hotspot further comprises setting up the hotspot with an attack detection capability.

3. The method defined by claim 1, further comprising detecting presence of the second client device, and issuing the request upon said detecting.

4. The method defined by claim 1, further comprising carrying out a scan for active access points allowable according to a predefined criterion, and upon failing to find an allowable access point in the scan, issuing the request.

5. The method defined by claim 1, further comprising carrying out a scan for active access points allowable according to a predefined criterion, and upon failing to find an allowable access point having a signal that is higher than a predefined threshold in the scan, issuing the request.

6. The method defined by claim 1, further comprising issuing the request upon availability of a predefined communication channel to the first client device.

7. An apparatus of secure hotspot set-up, the apparatus comprising:
a computer processor of a first client device of a user, the first client device being used by the user and implementing a security protocol pre-selected by an entity to communicate with the user;
a request receiver (110), implemented on the computer processor, configured to receive a request to setup a secure hotspot allowing the first client device of the user to bridge between a wide area network and a second client device of the user, the request being received from the first client of the user upon being present in a geographical area predefined by the entity; and
a hotspot set-upper (120), in communication with said request receiver, configured to, based on the received request, setup the hotspot for providing the second client device of the user with access to a wide area network, the first client device of the user using the security protocol pre-selected by the entity to communicate with the user when the first client device is bridging between the second client device of the user and the wide area network and the second client device of the user is connected to the set-up hotspot.

## Patentansprüche

1. Computerimplementiertes Verfahren zum Einrichten eines sicheren Hotspots, wobei das Verfahren Schritte umfasst, für deren Ausführung ein Computerprozessor eines ersten Client-Geräts eines Benutzers programmiert ist, wobei die Schritte umfassen:
a) auf dem ersten Client-Gerät des Benutzers, wobei das erste Client-Gerät von dem Benutzer verwendet wird und ein von einer Entität vorausgewähltes Sicherheitsprotokoll implementiert, um mit dem Benutzer zu kommunizieren, Empfangen (410) einer Anforderung, einen sicheren Hotspot einzurichten, der es dem ersten Client-Gerät des Benutzers ermöglicht, zwischen einem Wide Area Network und einem zweiten Client-Gerät des Benutzers zu überbrücken, wobei die Anforderung von dem ersten Client-Gerät des Benutzers empfangen wird, wenn es sich in einem von der Entität vordefinierten geografischen Gebiet befindet; und
b) auf der Grundlage der empfangenen Anforderung, Einrichten (420) des Hotspots, um dem zweiten Client-Gerät des Benutzers Zugang zu dem Wide Area Network bereitzustellen, wobei das erste Client-Gerät des Benutzers das von der Entität vorausgewählte Sicherheitsprotokoll verwendet, um mit dem Benutzer zu kommunizieren, wenn das erste Client-Gerät zwischen dem zweiten Client-Gerät des Benutzers und dem Wide Area Network überbrückt und das zweite Client-Gerät mit dem eingerichteten Hotspot verbunden ist.

2. Verfahren nach Anspruch 1, wobei das Einrichten des Hotspots ferner Einrichten des Hotspots mit einer Angriffserkennungsfunktion umfasst.

3. Verfahren nach Anspruch 1, ferner umfassend Erkennen der Anwesenheit des zweiten Client-Geräts und Ausgeben der Anforderung bei dem Erkennen.

4. Verfahren nach Anspruch 1, ferner umfassend Durchführen einer Suche nach aktiven Zugangspunkten, die nach einem vordefinierten Kriterium zulässig sind, und, wenn bei der Suche kein zulässiger Zugangspunkt gefunden wird, Ausgabe der Anforderung.

5. Verfahren nach Anspruch 1, ferner umfassend Durchführen einer Suche nach aktiven Zugangspunkten, die nach einem vordefinierten Kriterium zulässig sind, und, wenn bei der Suche kein zulässiger Zugangspunkt mit einem Signal gefunden wird, das höher als ein vordefinierter Schwellenwert ist, die Ausgabe der Anforderung.

6. Verfahren nach Anspruch 1, ferner umfassend Ausgeben der Anforderung bei Verfügbarkeit eines vordefinierten Kommunikationskanals für das erste Client-Gerät.

7. Gerät zum Einrichten eines sicheren Hotspots, wobei das Gerät umfasst:
einen Computerprozessor eines ersten Client-Geräts eines Benutzers, wobei das erste Client-Gerät von dem Benutzer verwendet wird und ein Sicherheitsprotokoll implementiert, das von einer Entität vorausgewählt wird, um mit dem Benutzer zu kommunizieren;
einen Anforderungsempfänger (110), der auf dem Computerprozessor implementiert ist und konfiguriert ist, um eine Anforderung zum Einrichten eines sicheren Hotspots zu empfangen, der es der ersten Client-Gerät des Benutzers ermöglicht, zwischen einem Wide Area Network und einem zweiten Client-Gerät des Benutzers zu überbrücken, wobei die Anforderung von dem ersten Client des Benutzers empfangen wird, wenn es sich in einem von der Entität vordefinierten geografischen Gebiet befindet; und
einen Hotspot-Einrichter (120), der in Kommunikation mit dem Anforderungsempfänger steht und konfiguriert ist, um auf der Grundlage der empfangenen Anforderung den Hotspot einzurichten, um dem zweiten Client-Gerät des Benutzers Zugang zu einem Wide Area Network bereitzustellen, wobei das erste Client-Gerät des Benutzers das von der Entität vorausgewählte Sicherheitsprotokoll verwendet, um mit dem Benutzer zu kommunizieren, wenn das erste Client-Gerät zwischen dem zweiten Client-Gerät des Benutzers und dem Wide Area Network überbrückt und das zweite Client-Gerät des Benutzers mit dem eingerichteten Hotspot verbunden ist.

## Revendications

1. Un procédé mis en oeuvre par ordinateur d'établissement d'un point d'accès, ou "hotspot", sécurisé, le procédé comprenant des étapes qu'un processeur informatique d'un premier dispositif client d'un utilisateur est programmé pour mettre en oeuvre, les étapes comprenant :
a) sur le premier dispositif client de l'utilisateur, le premier dispositif client étant utilisé par l'utilisateur et mettant en oeuvre un protocole de sécurité présélectionné par une entité pour communiquer avec l'utilisateur, le fait (410) de recevoir une requête pour établir un hotspot sécurisé permettant au premier dispositif client de l'utilisateur d'établir un pont entre un réseau étendu et un deuxième dispositif client de l'utilisateur, la requête étant reçue du premier dispositif client de l'utilisateur lorsqu'il est présent dans une zone géographique prédéfinie par l'entité ; et
b) sur la base de la requête reçue, le fait (420) d'établir le point d'accès pour fournir au deuxième dispositif client de l'utilisateur un accès au réseau étendu, le premier dispositif client de l'utilisateur utilisant le protocole de sécurité présélectionné par l'entité pour communiquer avec l'utilisateur lorsque le premier dispositif client fait le pont entre le deuxième dispositif client de l'utilisateur et le réseau étendu et que le deuxième dispositif client est connecté au point d'accès configuré.

2. Le procédé défini par la revendication 1, dans lequel ledit établissement du hotspot comprend en outre le fait d'établir le hotspot avec une capacité de détection d'attaque.

3. Le procédé défini par la revendication 1, comprenant en outre la détection de la présence du deuxième dispositif client, et l'émission de la requête lors de ladite détection.

4. Le procédé défini par la revendication 1, comprenant en outre le fait d'effectuer une recherche de points d'accès actifs autorisés selon un critère prédéfini, et en cas d'échec à trouver un point d'accès autorisé dans la recherche, le fait d'émettre la requête.

5. Le procédé défini par la revendication 1, comprenant en outre le fait d'effectuer une recherche de points d'accès actifs autorisés selon un critère prédéfini, et en cas d'échec à trouver un point d'accès autorisé ayant un signal supérieur à un seuil prédéfini dans la recherche, le fait d'émettre la requête.

6. Le procédé défini par la revendication 1, comprenant en outre le fait d'émettre la requête dès la disponibilité d'un canal de communication prédéfini vers le premier dispositif client.

7. Un appareil de configuration de point d'accès sécurisé, l'appareil comprenant :
un processeur informatique d'un premier dispositif client d'un utilisateur, le premier dispositif client étant utilisé par l'utilisateur et mettant en oeuvre un protocole de sécurité présélectionné par une entité pour communiquer avec l'utilisateur ;
un récepteur de requête (110), implémenté sur le processeur informatique, configuré pour recevoir une requête pour établir un point d'accès sécurisé permettant au premier dispositif client de l'utilisateur de faire un pont entre un réseau étendu et un deuxième dispositif client de l'utilisateur, la requête étant reçue du premier client de l'utilisateur dès lors qu'il est présent dans une zone géographique prédéfinie par l'entité ; et
un dispositif (120) d'établissement de point d'accès, en communication avec ledit récepteur de requête, configuré pour, sur la base de la requête reçue, établir le point d'accès pour fournir au deuxième dispositif client de l'utilisateur un accès à un réseau étendu, le premier dispositif client de l'utilisateur utilisant le protocole de sécurité présélectionné par l'entité pour communiquer avec l'utilisateur lorsque le premier dispositif client fait le pont entre le deuxième dispositif client de l'utilisateur et le réseau étendu et que le deuxième dispositif client de l'utilisateur est connecté au point d'accès établi.
